**Europäisches Patentamt**

**European Patent Office**

**Office européen des brevets**

(19)

(11) Veröffentlichungsnummer : **0 489 962 B1**

# (12) EUROPÄISCHE PATENTSCHRIFT

(45) Veröffentlichungstag der Patentschrift :
**09.11.94 Patentblatt 94/45**

(51) Int. Cl.⁵ : **H02K 15/12,** F26B 23/02,
F23G 7/06

(21) Anmeldenummer : **90124086.1**

(22) Anmeldetag : **13.12.90**

(54) **Verfahren und Vorrichtung zum Tränken und/oder Beschichten von Gegenständen.**

(43) Veröffentlichungstag der Anmeldung :
**17.06.92 Patentblatt 92/25**

(45) Bekanntmachung des Hinweises auf die
Patenterteilung :
**09.11.94 Patentblatt 94/45**

(84) Benannte Vertragsstaaten :
**AT CH DE FR GB IT LI NL**

(56) Entgegenhaltungen :
**EP-A- 0 273 230**
**EP-A- 0 385 411**
**DE-A- 3 802 475**
**US-A- 3 917 444**
**SOVIET INVENTIONS ILLUSTRATED, Woche
C39, 08 November 1980, DERWENT,London
(GB), & SU-A-714583 (POLESHCHUK et al).**

(73) Patentinhaber : **BOOCKMANN GMBH**
**Sonnenstrasse 12**
**D-97618 Niederlauer (DE)**

(72) Erfinder : **Boockmann, Gerhard**
**Sonnenstrasse 14**
**W-8741 Niederlauer (DE)**
Erfinder : **Börner, Roland**
**Apothekengasse 1-5**
**W-8740 Bad Neustadt/Saale (DE)**

(74) Vertreter : **Weber, Dieter, Dr. et al**
**Weber, Dieter, Dr.,**
**Seiffert, Klaus, Dipl.-Phys.,**
**Lieke, Winfried, Dr.**
**Postfach 61 45**
**D-65051 Wiesbaden (DE)**

## Beschreibung

Träufel- und Tauchrollanlagen, insbesondere zum Tränken und Verbacken von elektrotechnischen Wickelgütern, wie von Wicklungen für Elektromotoren, sind allgemein bekannt. In diesen Vorrichtungen werden die Wickelgüter mit einer geeigneten Transporteinrichtung, wie einer Endloskette mit Aufnahmeeinrichtungen, zunächst durch eine Vorwärmzone und dann durch eine Träufelzone und/oder Tauchrollzone und/oder Beschichtungszone und schließlich durch eine Nachhärtungszone geführt. Gegebenenfalls kann auch noch eine Zwischenhärtungszone eingeschaltet sein.

In der Vorwärmzone werden die Wickelgüter auf eine Temperatur erhitzt, bei der das Träufelharz schnell eindringt und innerhalb geeigneter Verweilzeit geliert. Diese Vorwärmtemperatur liegt geeigneter Verweilzeit geliert. Diese Vorwärmtemperatur liegt gewöhnlich in der Größenordnung von 130 °C. Anschließend an das Vorheizen werden die Wickelgüter rotierend mit dem Träufelharz übergossen oder durch kleine das Harz enthaltende Bäder gerollt und gegebenenfalls noch in einer zusätzlichen Beschichtungszone nachbeschichtet. Während dieser Behandlungen wird die zur Verbackung der Wicklungen erforderliche Harzmenge aufgenommen. Als Träufelharze werden gewöhnlich ungesättigte Polyesterharze eingesetzt. Nach der erforderlichen Harzaufnahme läßt man die Wickelgüter in einer Nachhärtungszone so lange rotieren, bis das Tauch- oder Träufelharz nicht mehr abtropfen kann. Außerdem erfolgt in der Nachhärtungszone die Endaushärtung. Wie erwähnt, wird gelegentlich vor der Nachhärtung noch eine Starkschichtbeschichtung vorgenommen, der eine Zwischenhärtung vorausgehen kann. (Siehe DE-A- 3802475 und EP-A- 0385411).

In jedem Fall werden in allen Zonen nach der Vorwärmzone flüchtige Stoffe, wie Styrol oder Vinyltoluol, emittiert und werden normalerweise über nicht zu vermeidende Undichtheiten der Anlage in die Raumluft der Räume, wo die Anlage steht, und im übrigen über den Schornstein an die Atmosphäre abgegeben.

Die der Erfindung zugrundeliegende Aufgabe bestand nun darin, eine wirksame Entsorgung der Emissionen solcher Verfahren zu erhalten und gleichzeitig den Gesamtenergiebedarf des Verfahrens zu vermindern.

Diese Aufgabe wird mit dem erfindungsgemäßen Verfahren und der erfindungsgemäßen Vorrichtung gelöst.

Das erfindungsgemäße Verfahren zum Tränken und/oder Beschichten von Gegenständen in einer Träufel- und/oder Tauchrollanlage unter Hindurchführen der Gegenstände durch eine Vorwärmzone, wenigstens eine Träufel-, Tauchroll- und/oder Beschichtungszone, eine Nachhärtungszone und gegebenenfalls wenigstens eine Zwischenhärtungszone ist dadurch gekennzeichnet, daß man die Abluft der Träufel-, Tauchroll-, Beschichtungs-, Zwischenhärtungs- und/oder Nachhärtungszone als Rohgas in eine Nachverbrennungsanlage überführt, wobei das Rohgas durch indirekten Wärmeaustausch mit dem Reingas der Nachverbrennung erhitzt wird, daß man das Reingas der Nachverbrennung wenigstens teilweise zu der Vorwärmzone zurückführt und daß man den Energieinhalt des zur Vorwärmzone zurückgeführten Reingases so einstellt, daß der Energiebedarf der Vorwärmzone im wesentlichen gerade gedeckt wird.

Da man bei diesem Verfahren den Energieinhalt der im Verfahren emittierten Schadstoffe für das Verfahren ausnutzt, ist der Gesamtenergiebedarf dieses Verfahrens geringer als bei einem vergleichbaren Verfahren ohne Nachverbrennung. Die Entsorgung der Emissionen erfolgt also nicht auf Kosten zusätzlicher Energiezufuhr, sondern führt sogar zu Energieeinsparungen, was bei sonst üblichen Abluftbehandlungen nicht eintritt, da diese gewöhnlich unter zusätzlicher Energiezufuhr ablaufen. Der technische Effekt des erfindungsgemäßen Verfahrens ist also ein doppelter, nämlich der einer Emissionsbeseitigung einerseits und einer Energieeinsparung andererseits.

Wenn in Verbindung mit der Nachverbrennung oder Nachverbrennungsanlage von Rohgas und Reingas die Rede ist, so bedeutet das Rohgas die mit Schadstoffen beladene, der Nachverbrennungsanlage zugeführte Luft vor der Nachverbrennung und das Reingas die Abluft aus der Nachverbrennungsanlage nach Beseitigung der Schadstoffe durch die Nachverbrennung.

Bevorzugt und im Regelfall wird die gesamte Abluft aller Zonen der Träufel- und/oder Tauchrollanlage nach der Vorwärmzone zu der Nachverbrennungsanlage überführt, wobei diese Abluft den einzelnen Zonen separat oder insgesamt über die Nachhärtungszone entnommen werden kann. Es ist aber auch möglich, nur die Abluft eines Teils dieser Zonen zur Nachverbrennungsanlage zu überführen, da möglicherweise die Emissionen in der einen oder anderen Zone gering genug sind, um sie ohne Nachverbrennung an die Umgebung abzugeben.

Die Träufel- und/oder Tauchrollanlage als solche arbeitet in üblicher Weise, gewöhnlich wie handelsübliche Träufel- und Tauchrollautomaten. Diese handelsüblichen Träufel- und Tauchrollautomaten haben aber keine Nachverbrennungsmöglichkeit, da man die Schadstoffbelastung bei solchen Anlagen gewöhnlich als ausreichend gering ansah, um zusätzliche Entsorgungseinrichtungen zu vermeiden. Mit zunehmender Sensibilisierung der Bevölkerung werden aber auch hier Maßnahmen zur Emissionsreduzierung erforderlich werden. Diese sind besonders vorteilhaft, wenn sie gleichzeitig, wie das erfindungsgemäße Verfahren, zur Verminderung des Gesamtenergiebedarfs führen.

Wenn im Kontext dieser Beschreibung und Ansprüche davon die Rede ist, daß der Energiebedarf der Vorwärmzone im wesentlichen gerade gedeckt werden soll, so ist damit gemeint, daß mit dem Reingas der Nachverbrennungsanlage der Vorwärmzone gerade genügend, vorzugsweise etwas zuviel Energie zugeführt oder angeboten wird, um ohne zusätzliche Heizeinrichtungen die zu tränkenden und/oder zu beschichtenden Gegenstände auf die in den nachfolgenden Zonen erforderliche Temperatur, wie beispielsweise 130 °C, zu bringen. Andererseits soll der Vorwärmzone auf diese Weise möglichst nicht wesentlich mehr Energie zugeführt werden, als für dieses Erwärmen erforderlich ist. Ein wirtschaftliches Optimum hinsichtlich Anlagen- und Betriebskosten wird bei möglichst genauer Auslegung des Wärmetausches erreicht. Dies besagt selbstverständlich nicht, daß der Erfindungsgedanke verlassen würde, wenn der Energiebedarf der Vorwärmzone durch den Energieinhalt des Reingases in gewissem Maße unterdeckt oder überdeckt würde. Beispielsweise läge mit Sicherheit eine Unterdeckung oder Überdeckung bis zu 30 % innerhalb des Erfindungsgedankens.

Weiterhin muß berücksichtigt werden, daß selbstverständlich nicht der gesamte Energieinhalt des zur Vorwärmzone zurückgeführten Reingases zur Deckung des Energiebedarfs der Vorwärmzone nutzbar ist. Ein Teil des Energieinhaltes des Reingases wird immer ungenutzt mit dem Abgas aus der Vorwärmzone in den Schornstein gehen und damit an die Umgebung abgegeben werden. Dies bedeutet, daß der Energieinhalt des zur Vorwärmzone zurückgeführten Reingases sich aus der an die Vorwärmzone abgegebenen Energiemenge und der die Vorwärmzone ungenutzt verlassenden Energiemenge zusammensetzen muß.

Die Einstellung des Energieinhaltes des zur Vorwärmzone zurückgeführten Reingases kann grundsätzlich auf dreierlei Weise erfolgen,

1. durch das gezielte Auslegen der Einzelkomponenten der Anlage, insbesondere des Wärmetauschers,

2. durch die Grundeinstellung der verstellbaren Komponenten der Anlage, insbesondere der Rohgaszufuhrmenge zu der Nachverbrennungsanlage und der Reingaszufuhrmenge zu dem Wärmetauscher für den indirekten Wärmeaustausch mit dem der Nachverbrennungsanlage zugeführten Rohgas, und

3. durch Regelung verschiedener Komponenten der Anlage, insbesondere einer Zusatzheizung für die Nachverbrennungsanlage, der Rohgaszufuhrmenge zur Nachverbrennungsanlage und der Reingaszufuhrmenge zu dem Wärmetauscher, zweckmäßig jeweils in Abhängigkeit von der Temperatur in der Nachverbrennungsanlage, sowie einer Einrichtung zur Steuerung der zur Vorwärmzone zurückgeführten Reingasmenge, zweckmäßig in Abhängigkeit von der Temperatur in der Vorwärmzone.

Für die Grundeinstellung und Regelung der Reingaszufuhrmenge zu dem Wärmetauscher ist es bevorzugt, eine Bypassleitung mit einem regelbaren Ventil vorzusehen, mit Hilfe derer die Menge an Reingas der Nachverbrennungsanlage gesteuert werden kann, die einerseits durch den Wärmetauscher und andererseits an ihm vorbei direkt in die Rückführleitung zur Vorwärmzone geführt wird.

Das schadstoffbeladene Abgas wird aus den verschiedenen oben angegebenen Zonen zweckmäßig mit Hilfe eines Gebläses abgesaugt, wobei in diesen Zonen ein Unterdruck entsteht, so daß schadstoffbeladenes Abgas diese Zonen nicht oder praktisch nicht an anderen Stellen, wie der Ketteneintrittsschleuse in die Träufel- oder Tauchrollzone oder der Kettenaustrittsschleuse, aus der Nachhärtungszone verläßt.

Je nach der speziellen Anwendung des Verfahrens stellt man in der Nachverbrennungsanlage eine Temperatur im Bereich von 300 bis 900 °C, wie beispielsweise in der Größenordnung von 700 bis 800 °C, und eine Verweilzeit im Bereich von 1/10 bis 5 s, vorzugsweise in der Größenordnung von etwa 1 s ein. Die Wärmeaustauschkapazität des Wärmetauschers wird bei dessen Auslegung zweckmäßig etwas größer als erforderlich gewählt, da die Feineinstellung der Wärmeaustauschkapazität durch die Bypassregelung korrigiert werden kann. Durch die Auslegung der Anlagenteile und die Grundeinstellung wird für die jeweilige spezielle Anwendung der weitgehend optimale Wert für den Energieinhalt der zur Vorwärmzone zurückgeführten Reingasmenge vorbestimmt. Die Feineinstellung und eine Korrektur bei schwankenden oder während einer Verfahrensumstellung veränderten Schadstoffemissionen und/oder bei verändertem Energiebedarf erfolgt durch temperaturabhängige Steuerung der Rohgaszufuhr, der Rückführmenge, des Bypassdurchsatzes und der Temperatur der Zusatzheizung. Wenn beispielsweise die Temperatur in der Nachverbrennungsanlage über den Sollwert ansteigt, kann durch Erhöhung des Durchsatzes in der Bypassleitung, durch Reduzierung oder Abstellung der Zusatzheizung oder durch Verminderung der Rohgaszufuhr mit Hilfe des Gebläses in der Überführungsleitung gegengesteuert werden. Bei Überschreiten der Temperatur in der Vorwärmzone kann durch Reduzierung der Rückführmenge gegengesteuert werden, wobei die überschüssige Reingasmenge direkt an den Kamin abgegeben werden kann.

Wenn in der Nachverbrennungsanlage die Temperatur unter den Sollwert fällt, kann durch Erhöhung der Leistung der Zusatzheizung, durch Minderung des Bypassdurchsatzes und/oder durch Minderung der Rohgaszufuhr gegengesteuert werden. Entsprechend kann bei Absinken der Temperatur in der Vorwärmzone aus irgendwelchen Gründen durch Erhöhung der Rückführmenge gegengesteuert werden.

In bestimmten Fällen kann die durch indirekten Wärmeaustausch auf das Rohgas übertragene Wärmeenergie für die Verbrennung in der Nachverbrennungsanlage ausreichen. Im Regelfall wird man jedoch eine weitere Wärmeenergiezufuhr durch eine Zusatzheizung benötigen. Diese ist auch für das Anfahren der Nachverbrennung erforderlich.

Vorzugsweise sieht man in der Nachverbrennungsanlage einen Verbrennungskatalysator üblicher Zusammensetzung vor. Die Temperatureinstellung in der Nachverbrennungsanlage erfolgt so, daß eine beständige Verbrennung darin stattfindet.

Die erfindungsgemäße Vorrichtung zur Durchführung des obigen Verfahrens besitzt eine Vorwärmzone, wenigstens eine Träufel-, Tauchroll- und/oder Beschichtungszone, eine Nachhärtungszone und gegebenenfalls wenigstens eine Zwischenhärtungszone sowie eine Transporteinrichtung für das Hindurchführen der zu tränkenden und/oder zu beschichtenden Gegenstände durch diese Zonen. Erfindungsgemäß enthält die Vorrichtung weiterhin eine über eine Rohrleitung mit der Träufel-, Tauchroll-, Beschichtungs-, Zwischenhärtungs- und/oder Nachhärtungszone, vorzugsweise mit letzterer verbundene Nachverbrennungsanlage, eine Heizeinrichtung und einen Wärmeaustauscher für indirekten Wärmeaustausch des Rohgases mit dem Reingas der Nachverbrennungsanlage, jeweils vor oder in der Nachverbrennungsanlage, eine Reingasleitung von der Nachverbrennungsanlage zu der Vorwärmzone sowie Einrichtungen zur Einstellung des Energieinhaltes des Reingases der Nachverbrennungsanlage. Wie die Einrichtungen zur Einstellung des Energieinhaltes des Reingases der Nachverbrennungsanlage beschaffen sein können, wurde oben in Verbindung mit der Diskussion des Verfahrens dargelegt. Sie können auf einer Auslegung von Komponenten der Anlage, auf der Grundeinstellung sowie der Regelung einzelner Anlagenteile beruhen.

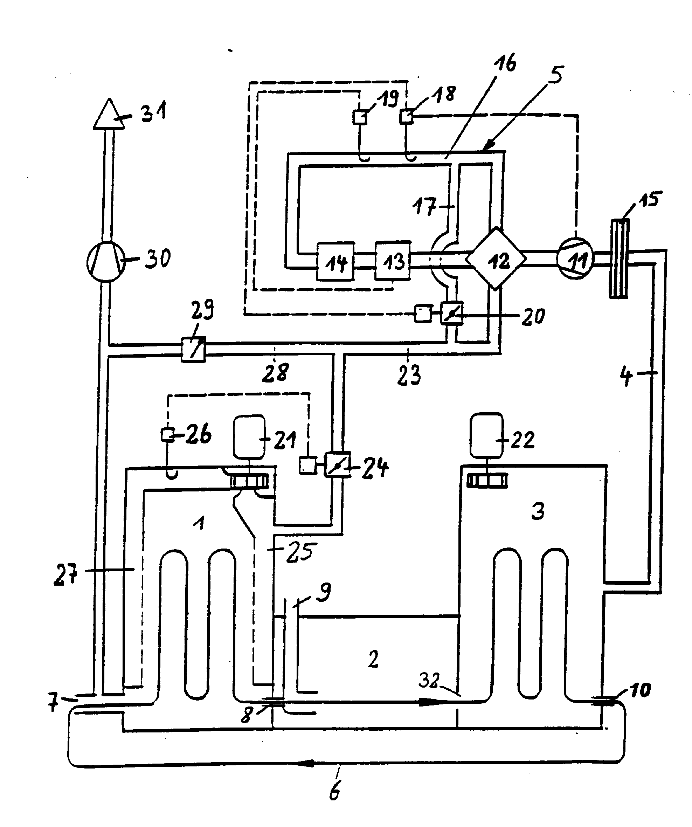

Die beiliegende Zeichnung zeigt ein die Erfindung nicht beschränkendes Ausführungsbeispiel einer erfindungsgemäßen Vorrichtung in schematischer Darstellungsweise.

Die in der Zeichnung dargestellte Vorrichtung besitzt eine Vorheizzone 1, eine Träufel- oder Tauchrollzone 2 und einen Nachhärtungsofen 3, der über eine Rohrleitung 4 mit der Nachverbrennungsanlage 5 verbunden ist.

Mit Hilfe der umlaufenden Endloskette 6 werden die Gegenstände über den Ketten- und Frischlufteintritt 7 in die Vorwärmzone 1 und über die Ketteneintrittsschleuse 8 bis zur Kettenaustrittsschleuse 10 durch die oben genannten Zonen 1 bis 3 der Anlage geführt. Mit 9 ist ein Frischluftansaugstutzen in der Träufel- oder Tauchrollzone 2 bezeichnet. Die Bezugszeichen 21 und 22 betreffen Umluftventilatoren der Vorwärmzone und im Nachhärtungsofen.

Abluft aus dem Nachhärtungsofen 3 wird mit Hilfe des Gebläses 11 der Rohrleitung 4 über das Filter 15 in die Nachverbrennungsanlage 5 als Rohgas eingesaugt. Dieses Rohgas geht zunächst durch den Wärmetauscher 12 in indirektem Wärmeaustausch mit Reingas aus der Leitung 16, so daß das Rohgas bis zu einer bestimmten Temperatur vorgeheizt wird. Danach geht das vorgeheizte Rohgas durch die Zusatzheizung 13, in der es auf die Verbrennungstemperatur aufgeheizt wird, und anschließend durch den Katalysator 14, wo die abschließende Verbrennung stattfindet. Das Reingas nach Verbrennung der Schadstoffe geht durch Leitung 16 entweder vollständig oder teilweise zum Erwärmen des Rohgases durch den Wärmetauscher 12 und gegebenenfalls zum Teil durch die Bypassleitung 17, deren Durchsatz mit Hilfe einer motorischen Bypassklappe 20 oder eines anderen Ventils gesteuert wird. Wie durch gestrichelte Linien in der Zeichnung gezeigt ist, erfolgt die Steuerung des Gebläses 11 und damit der Rohgaszufuhr zur Nachverbrennungsanlage 5 sowie das Öffnen und Schließen der Bypassklappe 20 und die Aktivierung der elektrischen Zusatzheizung 13 in Abhängigkeit von der Temperatur in der Reingasleitung 16, die mit Hilfe der Temperaturfühler 18 und 19 gemessen wird.

Das den Wärmetauscher 12 und gegebenenfalls die Bypassleitung 17 verlassende Reingas geht durch die gemeinsame Rückführleitung 23 und von dieser über die motorische Rückführungsklappe 24 in die Saugzone 25 des Umluftventilators 21 der Vorwärmzone 1. Die Stellung der motorischen Rückführungsklappe 24 wird in Abhängigkeit von der Temperatur in der Vorwärmzone 1 gesteuert, welche mit Hilfe des Temperaturfühlers 26 abgefühlt wird.

Nach Abgabe von Wärmeenergie an den Inhalt der Vorwärmzone 1 geht das Reingas über die Druckzone des Umluftventilators 21 und den Abluftventilator 30 in den Kamin 31.

An die Reinluftleitung 23 ist eine Zweigleitung 28 angeschlossen, die über eine Rückschlagklappe 29 mit dem Kamin 31 in Verbindung steht. Wenn zum Zwecke der Regulierung der zur Vorwärmzone 1 zurückgeführten Energiemenge der Durchsatz der Rückführleitung mit Hilfe der Rückführungsklappe 24 gedrosselt wird, geht die überschüssige Reingasmenge über die Zweigleitung 28 direkt in den Kamin.

Durch das folgende Beispiel wird die Erfindung weiter erläutert.

**Beispiel**

**1. Vorgegebene Werte, Rechengang**

**1.1. Werkstoffkonstanten**

mittlere spezifische Wärmekapazität

Kufer bei 100 °C:                    $0,108 \quad \dfrac{W \times h}{kg \times K}$

mittlere spezifische Wärmekapazität

Eisen bei 100 °C                     $0,131 \quad \dfrac{W \times h}{kg \times K}$

mittlere spezifische Wärmekapazität

Luft bei 450 °C und bei einer Zusammensetzung von 20 % $O_2$

78 % $N_2$

2 % $CO_2$                           $0,371 \quad \dfrac{W \times h}{m^3 \times K}$

Heizwert Styrol:            $11,7 \quad \dfrac{W \times h}{g}$

**1.2. Durch Anlage und Anwendungsfall vorgegebene Werte**

| | |
|---|---|
| Werkstückdurchsatz: | 250/h |
| Werkstückzusammensetzung: | 80 % Fe |
| | 20 % Cu |
| durchschnittliche Werkstückmasse: | 1,75 kg |
| durchschnittliche Masse Transportkette je Werkstück: | 1,75 kg |
| Temperatur im Vorwärmofen: | 130 °C |
| Temperatur im Nachhärteofen: | 140 °C |
| Styrolemission: | 1,4 kg/h |
| styrolbeladene Träufelanlagenabluft: | 220 $m^3$/h |
| Leckluft im Vorwärmofen: | 30 $m^3$/h |

### 1.3. Rechengang

Da die durch die Verbrennung des Styrols gewonnene Energie und eine an der elektrischen Zusatzheizung erzeugte Energie in den Vorwärmofen einegeleitet werden sollen, ist zuerst der Energiebedarf des Vorwärmofens zu bestimmen. Dieser Energiebedarf wird im Vorwärmofen durch Abkühlung eines heißen Reingasstromes auf Ofentemperatur gedeckt. Aus dem gegebenen Reingasvolumenstrom, der mittleren spezifischen Wärmekapazität der Luft und dem Energiebedarf des Vorwärmofens errechnet sich eine Differenztemperatur, um die das Reingas heißer als die Umluft des Vorwärmofens sein muß.

Aus dieser Reingastemperatur nach Wärmetauscher, dem gegebenen Volumenstrom, der gegebenen Träufelanlagen-Katalysator (Reingastemperatur vor Wärmetauscher) und einigen Werkstoffkonstanten errechnet sich die notwendige Wärmetauschfläche.

Aus der Wärmetauschfläche wird dann ein herstellbarer Wärmetauscher berechnet. Dieser Rechengang braucht hier nicht beschrieben zu werden. Weitere hier auch nicht beschriebene Berechnungen dienen zur Überprüfung der Vollständigkeit der Verbrennung, der Auslegung der Ventilatoren und der Einstellung der Druckverhältnisse in Träufel- und Nachverbrennungsanlage.

### 2. Berechnung

Die gesamte Berechnung basiert auf stündlichen Durchschnittswerten. Daher erscheinen in dieser Berechnung statt gewohnter Energieumsätze physikalisch richtige Leistungsumsätze.

### 2.1. Leistungsbedarf des Vorwärmofens

Dieser setzt sich zusammen aus: dem Leistungsbedarf für die Lufterhitzung auf Kamintemperatur, dem Leistungsbedarf für die Erhitzung der Werkstücke, dem Leistungsbedarf für die Erhitzung des Transportmittels und dem Leistungsbedarf für den Ausgleich des durch Abstrahlung und Konvektion eintretenden Leistungsverlustes.

### 2.1.1. Leistungsbedarf für die Lufterhitzung auf Kamintemperatur

$$\text{mittlere spezifische Wärmekapazität}$$

$$\text{Luft} = 0{,}371 \; \frac{W \times h}{m^3 \times K}$$

$$m^3 \times K$$

Kamintemperatur =

Temperatur im Vorwärmofen =                    130 °C

Zulufttemperatur = Raumtemperatur =            20 °C

Abluftvolumen =

ehemals styrolbeladene, jetzt

nachverbrannte Träufelanlagenabluft:          220 m³/h

+ Leckluft im Vorwärmofen:                     30 m³/h


Leistungsbedarf =

$$\frac{0,371 \times W \times h \times 110 \times K \times 250 \ m^3}{m^3 \times K \qquad h} =$$

                                               10,20 kW


**2.1.2. Leistungsbedarf für die Erhitzung der Werkstücke**


mittlere spezifische Wärmekapazität

Kupfer:                                        $0,108 \ \dfrac{W \times h}{kg \times K}$


mittlere spezifische Wärmekapazität

Eisen:                                         $0,131 \ \dfrac{W \times h}{kg \times K}$


Werkstückdurchsatz:                            250/h

Werkstückzusammensetzung:                      80 % Fe

                                               20 % Cu

durchschnittliche Werkstückmasse:              1,75 kg

Temperatur im Vorwärmofen:                     130 °C

Einitrittstemperatur der Werkstücke =

Raumtemperatur:                                20 °C

Energiebedarf:

$$\frac{(0,108 \times 0,2 \times 0,131 \times 0,8) \times W \times h \times 250 \times 1,75 \times kg \times 100 \times K}{kg \times K \qquad h}$$

$$= 6,08 \text{ kW}$$

### 2.1.3. Leistungsbedarf für die Erhitzung des Transportmittels

mittlere spezifische Wärmekapazität

Eisen: $0,131 \dfrac{W \times h}{kg \times K}$

Werkstückdurchsatz: 250/h

durchschnittliche Masse

Transportkette je Werkstück: 1,75 kg

Temperatur im Vorwärmofen: 130 °C

Eintrittstemperatur der Werkstücke

= Raumtemperatur: 20 °C

Energiebedarf =

$$\dfrac{0,131 \times W \times h \times 250 \times 1,75 \times kg \times 110 \times K}{kg \times K \qquad h}$$

$$= 6,30 \text{ kW}$$

### 2.1.4. Leistungsbedarf für den Ausgleich des durch Abstrahlung und Konvektion eintretenden Leistungsverlustes

Erfahrungswert:     ca. 2,00 kW

### 2.1.5. Leistungsbedarf Vorwärmofen

Summe der in 2.1.1. bis 2.1.4.

errechneten Werte: = 10,20 kW

+ 6,08 kW

+ 6,30 kW

+ 2,00 kW

**24,58 kW**

**2.2. Differentialtemperatur, um die das Reingas heißer als die Vorwärmofenumluft sein muß**

mittlere spezifische Wärmekapazität

Luft: $0,371 \dfrac{W \times h}{m^3 \times K}$

Reingasvolumenstrom = ehemals styrolbeladene, jetzt nachverbrannte
Träufelanlagenabluft: $220\ m^3/h$

Leistungsbedarf Vorwärmeofen: $24,58\ kW$

Temperaturerhöhung (bei einem Volumenstrom von 220 $m^3/h$) =

$\dfrac{24,58 \times kW \times m^3 \times K \times h}{0,371 \times W \times h \times 220 \times m^3}$ = $301\ K$

**2.3 Wärmeaustauscherfläche**

$$\text{Formel A: } \frac{Q}{k \times \Delta t_m}$$

A      = Wärmeaustauscherfläche
Q      = zu übertragender Wärmestrom
k      = Wärmedurchgangskoeffizient
$\Delta t_m$      = mittlere Temperaturdifferenz am Wärmetauscher

**2.3.1. Temperaturen am Wärmetauscher**

**2.3.1.1. Rohgas-Eintritt**

entspricht der Temperatur im Nachhärteofen:      140 °C

**2.3.1.2. Reingas-Eintritt**

Um eine möglichst vollständige Verbrennung
bei einer Verweilzeit von 1 (ohne Anrechnung der Katalysatorwirkung) zu erreichen, ist es günstig, eine Temperatur zwischen 720 und 800 °C einzustellen.      760 °C

### 2.3.1.3. Reingas-Austritt

Diese Temperatur entspricht der Umlufttemperatur des Vorwämrofens, erhöht um den Betrag, der nötig ist, gerade ausreichend Energie in den Vorwärmofen einzubringen (siehe 2.2.).

```
Temperatur im Vorwärmofen:                      130 °C

Differenztemperatur nach 2.2.:                  301  K

erforderliche Reingasaustrittstemperatur

bei einem Volumenstrom von 220 m³/h          .

= 130 °C + 301 K                             = 431 °C
```

### 2.3.1.4. Rohgas-Austritt

Da in diesem Wärmetauscher auf der Roh- und auf der Reingasseite ein und dasselbe Medium - also der gleiche Volumenstrom strömt, kann genügend genau die Temperaturdifferenz auf der Rohgasseite gleihc der auf der Reingasseite gesetzt werden.

```
Daraus ergibt sich folgende

Rohgausaustrittstemperatur:                     469 °C
```

### 2.3.2. Mittlere Temperaturdifferenz $\Delta t_m$

```
Entsprechend 2.3.1.4. sind die Tempera-

turdifferenzen auf Roh- und Reingasseite

gleich. Daher braucht bei diesem Wärmetau-

scher keine mittlere logarithmische Tempe-

raturdifferenz zur Auslegung berechnet

werden. Die mittlere Temperaturdifferenz

entspricht der Temperaturdifferenz auf der

Roh- oder Reingasseite:                         329 K
```

### 2.3.3. Zu übertragender Wärmestrom Q

Der Wärmetauscher muß so viel Wärmeenergie übertragen, daß das Rohgas von 140 auf 469 °C aufgeheizt werden kann.

Mittlere spezifische Wärmekapazität

Luft: $\qquad$ 0,371 $\dfrac{W \times h}{m^3 \times K}$

Rohgasvolumenstrom: $\qquad$ 220 m³/h

Temperaturdifferenz auf der Rohgasseite: $\qquad$ 329 K

zu übertragender Wärmestrom =

$\dfrac{0,371 \times W \times h \times 220 \times m^3 \times 329 \times K}{m^3 \times K \times h}$ $\qquad$ 28,85 kW

### 2.3.4. Wärmedurchgangskoeffizient

$$\text{Formel } k = \cfrac{1}{\dfrac{1}{\alpha_1} + \dfrac{s}{\lambda} + \dfrac{1}{\alpha_2}}$$

$\alpha =$      Wärmeübergangszahl (in W/m² K) für Luft kann angesetzt werden: $\alpha = 5 + 3,4 \times v$

$v =$      Anströmgeschwindigkeit (in m/s)

$\alpha_1 =$      Wärmeübergangszahl (in W/m² K) Rohgas

$\alpha_2 =$      Wärmeübergangszahl (in W/m² K) Reingas

$s =$      Schichtdicke der wärmeübertragenden Wand (in m)

$\lambda =$      Wärmeleitzahl des Werkstoffes der Übertragungswand (in W/m K)

### 2.3.4.1. Wärmeübergangszahl Rohgas $\alpha_1$

In der Praxis hat es sich als günstig erweisen, am Rohgaseintritt eine Anströmgeschwindigkeit von 4 m/s einzustellen. Die Strömungsgeschwindigkeit nimmt aber im Wärmetauscher mit steigender Temperatur des Gases zu. Die Strömungsgeschwindigkeit ändert sich im Verhältnis der Absoluttemperatur.

Rohgaseintrittstemperatur: $\qquad$ 140 °C

Rohgasaustrittstemperatur: $\qquad$ 469 °C

Anströmgeschwindigkeit am Rohgaseintritt: $\qquad$ 4 m/s

$$v_1 = 4 \text{ m/s} \times \cfrac{273 + \dfrac{140 + 469}{2}}{273 + 140} = 5,59 \text{ m/s}$$

$$\alpha_1 = 5 + 3,4 \times v_1 = 5 + 3,4 \times 5,59 = \quad 24,01 \dfrac{W}{m^2 \times K}$$

### 2.3.4.2. Wäurmeübergangszahl Reingas $\alpha_2$

Reingaseintrittstemperatur:     760 °C

Reingasaustrittstemperatur:     431 °C

Anströmgeschwindigkeit am

Rohgaseintritt:     4 m/s

$$v_2 = 4 \text{ m/s} \times \frac{273 + \frac{760 + 431}{2}}{273 + 140} = 8{,}41 \text{ m/s}$$

$$\alpha_2 = 5 + 3{,}4 \times v_1 = 5 + 3{,}4 \times 8{,}41 = 33{,}59 \frac{W}{m^2 \times K}$$

### 2.3.4.3. Schichtdicke s

In der Praxis hat es sich als günstig erwiesen, z. B. Platten oder Rohre mit einer Stärke von 0,5 mm zu verwenden.

Schichtdicke = 0,5 mm = 0,0005 m

### 2.3.4.4. Wärmeleitzahl $\lambda$

Der in der Praxis häufig verwendete Stahl 1.4541 hat eine Wärmeleitzahl von zirka:

$$22 \frac{W}{m \times K}$$

### 2.3.4.5. Wärmedurchgangskoeffizient k

$$k = \frac{1}{\frac{1}{24{,}01} + \frac{0{,}0005}{22} + \frac{1}{33{,}59}} \qquad 14{,}0 \frac{W}{m^2 \times K}$$

### 2.3.5. Wärmeaustauscherfläche A

$$A = \frac{Q}{k \times \Delta t_m} = \frac{28{,}85 \times kW \times m^2 \times K}{14 \times W \times 329 \times K} = 6{,}26 \text{ m}^2$$

### 3. Auslegung der Anlagenkomponenten

Die im Schema beschriebene Anlagenkonfiguration zugrundegelegt und basierend auf der vorstehenden Berechnung sowie den gegebenen Anlagen- und Anwendungsdaten, sind die Anlagenkomponenten wie folgt auszulegen:

### 3.1. Anlagenparameter

siehe Punkt 1.2.

### 3.2. Brennraumvolumen

```
Durchsatz =      styrolbeladene
                 Träufelanlagenabluft:      220 m³/h
Verweilzeit (ausreichend für eine
vollständige Verbrennung bei 720 °C
ohne Katalysator):                         1 s
Brennraumvolumen = 220 m³/h x 1 s =                  0,062 m³
```

### 3.3 Leistungsgewinn aus Styrolverbrennung

```
Styrolemission                  1,4 kg/h
Heizwert Styrol:                11,7 W x h
```

$$\text{Leistungsgewinn} = \frac{11,7 \times W \times h \times 1,4 \times kg}{g \times h} = 16,38 \text{ kW}$$

### 3.4. Elektrische Zusatzheizung

### 3.4.1. Anschlußwert

$$50 \text{ kW}$$

### 3.4.2. Dauerleistung

Diese ergibt sich aus dem Leistungsbedarf des Vorwärmofens (siehe 2.1.5.) abzüglich des Leistungsgewinns aus der Styrolverbrennung (siehe 3.3.): 24,58 kW - 16,38 kW = 8,20 kW

### 3.5. TNV-Zuluftventilator 11

```
Radialventilator mit Direktantrieb
Volumenstrom                    100 - 1,000 Nm³/h
maximale Temperatur:                     150 °C
Gesamtpressung:                          2,9 kPa
Motorleistung:                           1,5 kW
```

### 3.6. TNV-Abluftventilator 30

```
Radialventilator mit Direktantrieb
Volumenstrom:                          100 - 1,000 Nm³/h
maximale Temperatur:                            150 °C
Gesamtpressung:                                 2,0 kPa
Motorleistung:                                  1,5 kW
```

### 3.7. Katalysator 14

Ganzmetall - Edelmetall - Katalysator 2 Stück
Anmessungen: jeweils 610 x 457 x 67 mm

### 3.8. Leistungsvergleich

### 3.8.1. Leistungsbedarf für Vorwärmzone ohne Nutzung einer erfindungsgemäßen TNV

siehe 2.1.5. =        24,58 kW

### 3.8.2. Leistungsbedarf für Vorwärmzone mit Nutzung einer erfindungsgemäßen TNV

Dieser ergibt sich aus dem Leistungsbedarf für die Vorwärmzone (siehe 2.1.5.) zuzüglich einem Leistungsbedarf für den Betrieb der Gebläse 11 und 30 (Erfahrungswert: je Gebläse unter 0,5 kW Dauerleistung) und abzüglich des Leistungsgewinns aus der Styrolverbrennung (siehe 3.3.):
24,58 kW + (2 x 0,5) kW - 16,38 kW =        9,20 kW

### Patentansprüche

1.  Verfahren zum Tränken und/oder Beschichten von Gegenständen in einer Träufel- und/oder Tauchrollanlage unter Hindurchführen der Gegenstände durch eine Vorwärmzone (1), wenigstens eine Träufel-, Tauchroll- und/oder Beschichtungszone (2), eine Nachhärtungszone (3) und gegebenenfalls wenigstens eine Zwischenhärtungszone, **dadurch gekennzeichnet,** daß man die Abluft der Träufel-, Tauchroll-, Beschichtungs-, Zwischenhärtungs- und/oder Nachhärtungszone als Rohgas in eine Nachverbrennungsanlage (5) überführt, wobei das Rohgas durch indirekten Wärmeaustausch mit dem Reingas der Nachverbrennung erhitzt wird, daß man das Reingas der Nachverbrennung wenigstens teilweise zu der Vorwärmzone (1) zurückführt und daß man den Energieinhalt des zur Vorwärmzone (1) zurückgeführten Reingases so einstellt, daß der Energiebedarf der Vorwärmzone im wesentlichen gerade gedeckt wird.

2.  Verfahren nach Anspruch 1, **dadurch gekennzeichnet,** daß man den Energieinhalt des Reingases durch Festlegung der Wärmeaustauschkapazität des Wärmetauschers (12) für den indirekten Wärmeaustausch mit dem Rohgas einstellt.

3.  Verfahren nach Anspruch 1 oder 2, **dadurch gekennzeichnet,** daß man den Energieinhalt des Reingases durch die Grundeinstellung der Rohgaszufuhrmenge zu der Nachverbrennung und/oder der Reingaszufuhrmenge zu dem indirekten Wärmeaustausch einstellt.

4.  Verfahren nach einem der Ansprüche 1 bis 3, **dadurch gekennzeichnet,** daß man den Energieinhalt des Reingases durch Regelung der Rohgaszufuhrmenge zur Nachverbrennung, der Reingaszufuhrmenge zum indirekten Wärmeaustausch, einer Zusatzheizung (13) vor oder während der Nachverbrennung, vorzugsweise jeweils in Abhängigkeit von der Temperatur während der Nachverbrennung, und/oder durch Regelung der Reingasrückführmenge zu der Vorwärmzone (1), vorzugsweise in Abhängigkeit von der Temperatur in der Vorwärmzone, einstellt.

5. Verfahren nach einem der Ansprüche 1 bis 4, **dadurch gekennzeichnet,** daß man das Rohgas während der Nachverbrennung durch einen Verbrennungskatalysator (14) führt.

6. Verfahren nach einem der Ansprüche 1 bis 5, **dadurch gekennzeichnet,** daß man in der Nachverbrennungsanlage (5) die Temperatur auf 300 bis 900 °C und die Verweilzeit auf 1/10 bis 5 s einstellt.

7. Verfahren nach einem der Ansprüche 1 bis 6, **dadurch gekennzeichnet,** daß man in der Nachverbrennungsanlage (5) einen Unterdruck erzeugt, der in der Zwischen und/oder Nachhärtungszone (3) einen Unterdruck gegenüber dem umgebenden Arbeitsraum hervorruft.

8. Verfahren nach Anspruch 7, **dadurch gekennzeichnet,** daß man in der Zwischen- und/oder Nachhärtungszone (3) einen Unterdruck erzeugt, der in der Träufel-, Tauchroll- und/oder Beschichtungszone (2) einen Unterdruck gegenüber dem umgebenden Arbeitsraum und/oder der Vorwärmzone (1) hervorruft.

9. Vorrichtung zur Durchführung des Verfahrens nach einem der Ansprüche 1 bis 8 mit einer Vorwärmzone (1), wenigstens einer Träufel-, Tauchroll- und/oder Beschichtungszone (2), einer Nachhärtungszone (3) und gegebenenfalls einer Zwischenhärtungszone sowie einer Transporteinrichtung (6) zum Transportieren von Gegenständen durch diese Zonen, **gekennzeichnet durch** eine über eine Rohrleitung (4) mit der Träufel-, Tauchroll-, Beschichtungs- (2), Zwischenhärtungs- und/oder Nachhärtungszone (3) verbundene Nachverbrennungsanlage (5), eine Heizeinrichtung (13) und einen Wärmetauscher (12) für indirekten Wärmeaustausch des Reingases mit dem Rohgas, jeweils vor oder in der Nachverbrennungsanlage (5), eine Reingasleitung (23) von der Nachverbrennungsanlage (5) zu der Vorwärmzone (1) sowie Einrichtungen zur Einstellung des Energieinhaltes des in die Vorwärmzone eintretenden Reingases.

10. Vorrichtung nach Anspruch 9, **dadurch gekennzeichnet,** daß die Einrichtungen zur Einstellung des Energieinhaltes des Reingases in der Auslegung der Wärmeaustauschkapazität des Wärmetauschers (12) bestehen.

11. Vorrichtung nach Anspruch 9 oder 10, **dadurch gekennzeichnet,** daß die Einrichtungen zur Einstellung des Energieinhaltes des Reingases aus der Grundeinstellung eines Gebläses (11) in der Rohrleitung (4) zur Nachverbrennungsanlage (5) und/oder der Grundeinstellung einer den Wärmetauscher (12) umgehenden Bypassleitung (17) bestehen.

12. Vorrichtung nach einem der Ansprüche 9 bis 11, **dadurch gekennzeichnet,** daß die Einrichtungen zur Einstellung des Energieinhaltes des Reingases aus einer Steuereinrichtung für den Durchsatz eines Gebläses (11) in der Rohrleitung (4) zu der Nachverbrennungsanlage (5), vorzugsweise in Abhängigkeit von einer Temperaturmessung in der Nachverbrennungsanlage (bei 18), bestehen.

13. Vorrichtung nach einem der Ansprüche 9 bis 12, **dadurch gekennzeichnet,** daß die Einrichtungen zur Einstellung des Energieinhaltes des Reingases aus einer Vorrichtung (20) zur Steuerung des Reingasdurchsatzes durch den Wärmetauscher 18) in der Nachverbrennungsanlage (5) bestehen.

14. Vorrichtung nach einem der Ansprüche 9 bis 13, **dadurch gekennzeichnet,** daß die Einrichtungen zur Einstellung des Energieinhaltes des Reingases aus einer regelbaren Heizeinrichtung (13) in der Nachverbrennungsanlage (5), bestehen, wobei die Heizeinrichtung vorzugsweise in Abhängigkeit von der Temperatur (bei 19) in der Nachverbrennungsanlage (5) regelbar ist.

15. Vorrichtung nach einem der Ansprüche 9 bis 14, **dadurch gekennzeichnet,** daß die Einrichtungen zur Einstellung des Energieinhaltes des Reingases aus einem steuerbaren Drosselventil (24) in der Reingasleitung (23) zur Vorwärmzone (1) bestehen, wobei das Drosselventil (24) vorzugsweise in Abhängigkeit von der Temperatur (bei 26) in der Vorwärmzone (1) steuerbar ist.

16. Vorrichtung nach einem der Ansprüche 5 bis 15, **dadurch gekennzeichnet,** daß in der Nachverbrennungsanlage (5) ein Verbrennungskatalysator (14) angeordnet ist.

17. Vorrichtung nach einem der Ansprüche 9 bis 16, **dadurch gekennzeichnet,** daß mit der Reingasleitung (23) zur Vorwärmzone (1) eine direkt mit dem Kamin (31) verbundene Zweigleitung (28) verbunden ist.

18. Vorrichtung nach einem der Ansprüche 9 bis 17, **dadurch gekennzeichnet,** daß ein in der Zwischen- und/oder Nachhärtungszone (3) und in der Träufel-, Tauchroll- und/oder Beschichtungszone (2) einen Unterdruck gegenüber dem umgebenden Arbeitsraum erzeugendes Gebläse (11) vorgesehen ist.

19. Vorrichtung nach Anspruch 18, **dadurch gekennzeichnet**, daß eine Übergangsöffnung (32) zwischen der Träufel-, Tauchroll- und/oder Beschichtungszone (2) und der Nachhärtungszone (3) vorgesehen ist, deren Querschnitt größer als die Summe der freien Querschnitte der Öffnung (8) für den Eintritt der Transporteinrichtung (6) in die Träufel-, Tauchroll- und/oder Beschichtungszone (2) und eines Frischluftausgangsstutzens (9) dieser Zone ist.

## Claims

1. A method for impregnating and/or coating objects in a drip- and/or dipping roller installation by passing the objects through a preheating zone (1), at least one drip-, dipping roller- and or coating zone (2), an afterbaking zone (3), and possibly at least one intermediate baking zone, **characterised in that** the outgoing air from the drip-, dipping roller-, coating-, intermediate baking- and/or afterbaking zone is passed as crude gas to a post-combustion installation (5), wherein the crude gas is heated by indirect heat exchange with the clean post-combustion gas, that the clean post-combustion gas is returned at least partly to the preheating zone (1), and that the energy content of the clean gas which is returned to the preheating zone (1) is adjusted in such a way that the energy requirement of the preheating zone is basically just met.

2. A method according to Claim 1, **characterised in that** the energy content of the clean gas is adjusted for indirect heat exchange with the crude gas by establishing the heat exchange capacity of the heat exchanger (12).

3. A method according to Claim 1 or Claim 2, **characterised in that** the energy content of the clean gas is adjusted by basic adjustment of the amount of crude gas supplied to the post-combustion step and/or of the amount of clean gas supplied for indirect heat exchange.

4. A method according to one of Claims 1 to 3, **characterised in that** the energy content of the clean gas is adjusted by controlling the amount of crude gas supplied to the post-combustion step, the amount of clean gas supplied for indirect heat exchange, by controlling an additional heating means (13) before or during post-combustion, preferably always in dependency on the temperature during post-combustion, and/or by controlling the amount of clean gas returned to the preheating zone (1), preferably in dependency on the temperature in the preheating zone.

5. A method according to one of Claims 1 to 4, **characterised in that** the crude gas is guided through a combustion catalyzer (14) during post-combustion.

6. A method according to one of Claims 1 to 5, **characterised in that** in the post-combustion installation (5) the temperature is set at 300 to 900°C and the residence time is set at 1/10 to 5 s.

7. A method according to one of Claims 1 to 6, **characterised in that** a reduced pressure is produced in the post-combustion installation (5) which causes a reduced pressure, in comparison with the surrounding working room, in the intermediate and/or afterbaking zone (3).

8. A method according to Claim 7, **characterised in that** in the intermediate- and/or afterbaking zone (3) a reduced pressure is produced which causes a reduced pressure, in comparison with the surrounding working room and/or preheating zone (1), in the drip-, dipping roller- and/or coating zone (2).

9. An apparatus for carrying out the method according to one of Claims 1 to 8, having a preheating zone (1), at least one drip-, dipping roller- and/or coating zone (2), an afterbaking zone (3), and possibly an intermediate afterbaking zone and also a conveyance means (6) for transporting objects through these zones, **characterised by** a post-combustion installation (5) which communicates by way of a conduit (4) with the drip-, dipping roller-, coating- (2), intermediate baking- and/or afterbaking zone (3), a heating means (13) and a heat exchanger (12) for indirect heat exchange of the clean gas with the crude gas, each being in front of or in the post-combustion installation (5), a clean gas conduit (23) from the post-combustion installation (5) to the preheating zone (1), and also means for adjusting the energy content of the clean gas entering the preheating zone.

**EP 0 489 962 B1**

10. An apparatus according to Claim 9, **characterised in that** the means for adjusting the energy content of the clean gas consist in the concept of the heat exchange capacity of the heat exchanger (12).

11. An apparatus according to Claim 9 or Claim 10, **characterised in that** the means for adjusting the energy content of the clean gas consist in the basic concept of a ventilator (11) in the conduit (4) to the post-combustion installation (5) and/or in the basic concept of a bypass line (17) which passes around the heat exchanger (12).

12. An apparatus according to one of Claims 9 to 11, **characterised in that** the means for adjusting the energy content of the clean gas consist of a means for controlling the operational capacity of a ventilator (11) in the conduit (4) to the post-combustion installation (5), preferably in dependency on a temperature measurement taken in the post-combustion installation (at 18).

13. An apparatus according to one of Claims 9 to 12, **characterised in that** the means for adjusting the energy content of the clean gas consist of a device (20) for controlling the throughput of clean gas through the heat exchanger (18) in the post-combustion installation (5).

14. An apparatus according to one of Claims 9 to 13, **characterised in that** the means for adjusting the energy content of the clean gas consist of a controllable heating means (13) in the post-combustion installation (5), wherein the heating means is preferably controllable in dependency on temperature (at 19) in the post-combustion installation (5).

15. An apparatus according to one of Claims 9 to 14, **characterised in that** the means for adjusting the energy content of the clean gas consist of a controllable throttle valve (24) in the clean gas conduit (24) to the preheating zone (1), wherein the throttle valve (24) is preferably controllable in dependency on the temperature (at 26) in the preheating zone (1).

16. An apparatus according to one of Claims 5 to 15, **characterised in that** a combustion catalyzer (14) is arranged in the post-combustion installation (5).

17. An apparatus according to one of Claims 9 to 16, **characterised in that** a branch line (28) which communicates directly with the chimney (31) communicates with the clean gas conduit (23) to the preheating zone (1).

18. An apparatus according to one of Claims 9 to 17, **characterised in that** provided in the intermediate- and/or afterbaking zone (3) and in the drip, dipping roller- and/or afterbaking zone (3) is a ventilator (11) which produces a reduced pressure in comparison with the surrounding working room.

19. An apparatus according to Claim 18, **characterised in that** a transitional opening (32) between the drip-, dipping roller- and/or coating zone (2) and the afterbaking zone (3) is provided, the cross-section of which transitional opening is greater than the sum of the free cross-sections of the opening (8) for entry of the conveyance means (6) into the drip-, dipping roller- and/or coating zone (2) and of a fresh air pipe outlet (9) from this zone.

**Revendications**

1. Procédé pour imprégner et/ou revêtir des objets dans une installation à versement goutte à goutte et/ou à cylindre de trempage avec passage des objets à travers une zone de préchauffage (1), au moins une zone de versement goutte à goutte, de cylindre de trempage et/ou de revêtement (2), une zone de post-durcissement (3) et le cas échéant au moins une zone de durcissement intermédiaire, caractérisé en ce qu'on transfère l'air sortant des zones de versement goutte à goutte, du cylindre de trempage, de revêtement, de durcissement intermédiaire et/ou de post-durcissement sous forme de gaz brut dans une installation de post-combustion (5), où le gaz brut est chauffé par échange de chaleur indirect avec le gaz pur de la post-combustion, en ce qu'on réintroduit le gaz pur de la post-combustion au moins en partie dans la zone de préchauffage (1) et en ce qu'on règle le contenu énergétique du gaz pur réintroduit dans la zone de préchauffage de manière à couvrir de façon sensiblement exacte le besoin en énergie de la zone de préchauffage.

2. Procédé selon la revendication 1, caractérisé en ce qu'on règle le contenu énergétique du gaz pur par fixation de la capacité d'échange de chaleur de l'échangeur de chaleur (12) pour l'échange de chaleur indirect avec le gaz brut.

3. Procédé selon la revendication 1 ou 2, caractérisé en ce qu'on règle le contenu énergétique du gaz pur par un réglage de base de la quantité de gaz brut introduite dans la post-combustion et/ou de la quantité de gaz pur introduite dans l'échange de chaleur indirect.

4. Procédé selon l'une des revendications 1 à 3, caractérisé en ce qu'on règle la teneur en énergie du gaz pur par réglage de la quantité de gaz brut introduite dans la post-combustion, de la quantité de gaz pur introduite dans l'échange de chaleur indirect, d'un chauffage supplémentaire (13) avant ou pendant la post-combustion, de préférence à chaque fois en fonction de la température pendant la post-combustion, et/ou par réglage de la quantité de gaz pur réintroduite dans la zone de préchauffage (1), de préférence en fonction de la température dans la zone de préchauffage.

5. Procédé selon l'une des revendications 1 à 4, caractérisé en ce qu'on conduit le gaz brut au cours de la post-combustion à travers un catalyseur de combustion (14).

6. Procédé selon l'une des revendications 1 à 5, caractérisé en ce que dans l'installation de post-combustion (5) on règle la température entre 300 et 900°C et le temps de séjour entre 1/10et 5 s.

7. Procédé selon l'une des revendications 1 à 6, caractérisé en ce qu'on produit dans l'installation de post-combustion (5) une dépression qui produit une dépression vis-à-vis de l'espace de travail environnant dans la zone intermédiaire et/ou de post-durcissement (3).

8. Procédé selon la revendication 7, caractérisé en ce qu'on produit dans la zone intermédiaire et/ou la zone de post-durcissement (3) une dépression qui provoque dans la zone de versement goutte à goutte, de cylindre de trempage et/ou de revêtement (2) une dépression par rapport à l'espace de travail environnant et/ou la zone de préchauffage (1).

9. Appareil permettant de réaliser le procédé selon l'une des revendications 1 à 8 avec une zone de préchauffage (1), au moins une zone de versement goutte à goutte, de cylindre de trempage et/ou de revêtement (2), une zone de post-durcissement (3) et le cas échéant une zone de durcissement intermédiaire ainsi qu'un dispositif de transport (6) pour le transport des objets à travers ces zones, caractérisé par une installation de post-combustion (5) reliée par l'intermédiaire d'une canalisation (4) à la zone de versement goutte à goutte, de cylindre de trempage, de revêtement (2), de durcissement intermédiaire et/ou de post-durcissement (3), un dispositif de chauffage (13) et un échangeur de chaleur (12) pour l'échange de chaleur indirect du gaz pur avec le gaz brut, à chaque fois avant ou dans l'installation de post-combustion (5), une canalisation de gaz pur (23) menant de l'installation de post-combustion (5) à la zone de préchauffage (1) ainsi que des dispositifs pour régler la teneur en énergie du gaz pur entrant dans la zone de préchauffage.

10. Appareil selon la revendication 9, caractérisé en ce que les dispositifs servant à régler la teneur en énergie du gaz pur consistent en un dimensionnement de la capacité d'échange de chaleur de l'échangeur de chaleur (12).

11. Appareil selon la revendication 9 ou 10, caractérisé en ce que les dispositifs pour régler la teneur en énergie du gaz pur se composent de l'installation de base d'une soufflerie (11) dans la canalisation (4) menant à l'installation de post-combustion (5) et/ou l'installation de base d'une canalisation de dérivation (17) contournant l'échangeur de chaleur (12).

12. Appareil selon l'une des revendications 9 à 11, caractérisé en ce que les dispositifs de réglage de la teneur en énergie du gaz pur se composent d'un dispositif de réglage du débit d'une soufflerie (11) dans la canalisation (4) menant à l'installation de post-combustion (5), de préférence en fonction d'une mesure de la température dans l'installation de post-combustion (en 18).

13. Appareil selon l'une des revendications 9 à 12, caractérisé en ce que les dispositifs de réglage de la teneur en énergie du gaz pur se composent d'un appareil (20) de réglage du débit de gaz pur à travers l'échangeur de chaleur (18) dans l'installation de post-combustion (5).

14. Appareil selon l'une des revendications 9 à 13, caractérisé en ce que les dispositifs de réglage de la teneur en énergie du gaz pur se composent d'un dispositif de chauffage réglable (13) dans l'installation de post-combustion (5), où le dispositif de chauffage est de préférence réglable en fonction de la température (en 19) dans l'installation de post-combustion (5).

15. Appareil selon l'une des revendications 9 à 14, caractérisé en ce que les dispositifs de réglage de la teneur en énergie du gaz pur se composent d'un robinet modérateur réglable (24) dans la canalisation de gaz pur (23) menant à la zone de pré-chauffage (1), le robinet modérateur (24) étant de préférence réglable en fonction de la température (en 26) dans la zone de préchauffage (1).

16. Appareil selon l'une des revendications 5 à 15, caractérisé en ce qu'un catalyseur de combustion (14) est disposé dans l'installation de post-combustion (5).

17. Appareil selon l'une des revendications 9 à 16, caractérisé en ce qu'une canalisation de branchement (28) directement reliée à la cheminée (31) est reliée à la canalisation de gaz pur (23) menant à la zone de pré-chauffage (1).

18. Appareil selon l'une des revendications 9 à 17, caractérisé en ce qu'est prévue une soufflerie (11) produisant dans la zone intermédiaire et/ou de post-durcissement (3) et dans la zone de versement goutte à goutte, de cylindre de trempage et/ou de revêtement (2) une dépression par rapport à l'espace de travail environnant.

19. Appareil selon la revendication 18, caractérisé en ce qu'est prévue entre la zone de versement goutte à goutte, de cylindre de trempage et/ou de revêtement (2) et la zone de post-durcissement (3) une ouverture de transition (32) dont la section transversale est supérieure à la somme des sections transversales libres de l'ouverture (8) d'entrée du dispositif de transport (6) dans la zone de versement goutte à goutte, de cylindre de trempage et/ou de revêtement (2) et d'une tubulure de sortie d'air frais (9) de cette zone.